## Europäisches Patentamt

## European Patent Office

## Office européen des brevets

(11) Veröffentlichungsnummer: **0 432 514 A2**

(12) **EUROPÄISCHE PATENTANMELDUNG**

(21) Anmeldenummer: 90122006.1

(22) Anmeldetag: 17.11.90

(51) Int. Cl.5: **A47G 27/02**

(30) Priorität: 14.12.89 DE 3941249

(43) Veröffentlichungstag der Anmeldung:
**19.06.91 Patentblatt 91/25**

(84) Benannte Vertragsstaaten:
**BE DE FR IT LU NL**

(71) Anmelder: Wilhelm Reisgies GmbH + Co. KG
**Schlebuscher Strasse 71
W-5090 Leverkusen 3(DE)**

(72) Erfinder: Reisgies, Bernd, c/o Wilhelm
**Reisgies GmbH + Co KG
Schlebuscher Strasse 71
W-5090 Leverkusen 3(DE)**

(74) Vertreter: Türk, Gille, Hrabal
**Brucknerstrasse 20
W-4000 Düsseldorf 13(DE)**

(54) **Saugfähiger Artikel.**

(57) Es ist ein saugfähiger Artikel in Form eines Schwammes, einer Matte od. dgl. offenbart, der einen aus Schaumstoff bestehenden Körper aufweist, welcher mit wenigstens einer ebenen Oberfläche ausgestaltet ist. Der Körper besteht aus offenzelligem Schaumstoff, insbesondere Polyesterschaum, wobei wenigstens eine seiner im wesentlichen ebenen Oberflächen mit einem Aufdruck beschichtet ist.

Xerox Copy Centre

EP 0 432 514 A2

## SAUGFÄHIGER ARTIKEL

Die Erfindung betrifft einen saugfähigen Artikel wie einen Schwamm, eine Matte od. dgl., der einen aus Schaumstoff bestehenden Körper hat, welcher wenigstens eine ebene Oberfläche aufweist.

Es ist bekannt, Schwämme und Bodenmatten wie insbesondere Badezimmermatten aus Schaumstoff, d.h. verschäumtem Kunststoff, herzustellen, wobei diese Artikel je nach Bedarf offenzellig und damit saugfähig oder auch geschlossenzellig und damit wasserabweisend sein können. Aus Schaumstoff kann man aber auch Verpackungskörper wie Verpackungshilfen und allgemein Platten, welche als Bildträger oder Informationsträger dienen, herstellen.

Es hat sich bisher als schwierig erwiesen, Schaumstoffartikel mit dekorativen Oberflächen zu versehen. Zu diesem Zwecke war es im allgemeinen notwendig, auf den Artikel eine dekorative Folie aufzubringen, beispielsweise aufzukaschieren. Dadurch wird aber der Charakter des Schaumstoffes verändert.

Der Erfindung liegt die Aufgabe zugrunde, einen saugfähigen Artikel wie einen Schwamm, eine Matte od. dgl. unmittelbar mit einer dekorativen Oberfläche versehen zu können, die eine gute Brillanz der bildlichen Darstellung aufweist.

Diese Aufgabe wird erfindungsgemäß mit einem saugfähigen Artikel gelöst, dessen Körper aus offenzelligem Schaumstoff besteht und bei dem wenigstens eine seiner ebenen Oberflächen mit einem Aufdruck, d.h. mit einer ein- oder mehrfarbigen Beschichtung, versehen ist. Vorzugsweise ist der Schaumstoff Polyesterschaum.

Gemäß einer praktischen Ausführungsform der Erfindung kann die mit der farblichen Beschichtung versehene bzw. bedruckte Oberfläche des Körpers des Artikels mit einer hautförmigen, wasserundurchlässigen und durchsichtigen Abdeckschicht versehen sein, wobei die Abdeckschicht zweckmäßig eine Kunststoff-Folie ist. Auf diese Weise kann die farbliche Beschichtung dauerhafter gemacht werden, beispielsweise wenn der erfindungsgemäße saugfähige Artikel ein Schwamm oder eine Fußbodenmatte ist. Ist der Artikel eine Fußbodenmatte, hat die wasserundurchlässige Abdeckschicht den zusätzlichen Vorteil, daß die Füße des Benutzers nicht mit Feuchtigkeit in Kontakt kommen, welche die Matte gegebenenfalls aufgesaugt hat, beispielsweise bei Verwendung in einem Badezimmer.

Nach einem weiteren Merkmal der Erfindung ist der Aufdruck vorzugsweise eine mittels Thermodruck aufgebrachte mehrfarbige Farbschicht. Wird der aus offenzelligem Polyesterschaum bestehende Körper beim Aufbringen der Farbschicht zusammengedrückt, beispielsweise auf etwa 50% seiner Dicke, kann die Farbschicht tief in die Poren des offenzelligen Schaumstoffes eindringen. Die im Schaumstoff befindliche Luft wird beim Zusammendrücken des Körpers entsprechend dem Ausmaß oder Grad des Zusammendrückens nahezu widerstandslos aus dem Körper entfernt, so daß dieser und die in ihm verbleibende Luft dem Druckvorgang praktisch keinen Widerstand entgegensetzen. Daher sind die auf dem Körper vorgesehenen Aufdrucke im Bild brillant, konturenscharf und tiefenwirksam, was beim Bedrucken von beispielsweise geschlossenzelligem Schaumstoff nicht zu erreichen ist, wie praktische Versuche erwiesen haben.

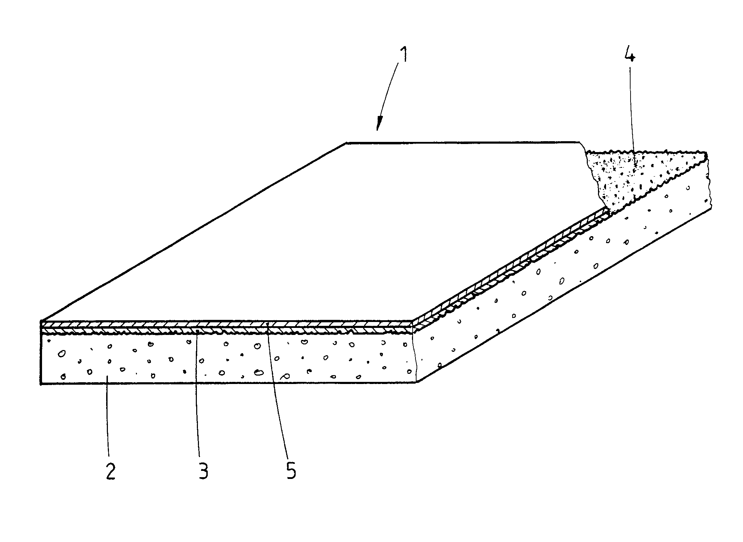

In der Zeichnung ist ein Ausführungsbeispiel eines erfindungsgemäßen saugfähigen Artikels, nämlich eines Schwammes, in Teilansicht schaubildlich dargestellt.

Der als Schwamm (1) bestimmte saugfähige Artikel weist einen aus einem Zuschnitt bestehenden Körper (2) auf, der aus offenporigem Schaumstoff, und zwar aus Polyester, besteht. Die Poren dieses Schaumstoffes sind in der Zeichnung durch Punkte angedeutet.

Auf der nahezu ebenen Oberseite des Körpers (2) befindet sich eine Beschichtung (3), die aus im Thermodruck aufgebrachter Farbe zusammengesetzt ist, wobei die Beschichtung (3) mehrfarbig sein kann. Auch braucht die Beschichtung nicht, wie in der Zeichnung angedeutet, durchgehend zu sein. Vielmehr kann sie auch Unterbrechungen enthalten.

Die Beschichtung (3) ist äußerst dünn und in der Zeichnung nur aus Gründen der besseren Anschaulichkeit verhältnismäßig dick dargestellt. Es ist erkennbar, daß das Material bzw. die Farben der Beschichtung (3) in die aufgrund der offenzelligen Struktur unebene bzw. konturierte Oberfläche (4) des Körpers (2) formschlüssig eingreifen bzw. in die obersten Poren oder Zellen des Körpers (2) hineinragen. Dadurch ist eine innige und auch optisch tiefenwirksame Verbindung zwischen der farbigen Beschichtung (3) und der Oberfläche (4) des Körpers (2) hergestellt.

Die farbige Beschichtung (3) ist beim dargestellten Ausführungsbeispiel mit einer durchsichtigen flexiblen Kunststoff-Folie (5) abgedeckt, die wasserundurchlässig ist und außerdem die Beschichtung (3) gegen Abnutzung schützt.

## Ansprüche

1. Saugfähiger Artikel wie Schwamm, Matte od. dgl., mit einem aus Schaumstoff bestehenden Körper, der wenigstens eine ebene Oberfläche aufweist, **dadurch gekennzeichnet**, daß der Körper (2) aus offenzelligem Schaumstoff besteht und wenigstens eine seiner im wesentlichen ebenen Oberflächen (4) mit einem Aufdruck (3) beschichtet ist.

2. Artikel nach Anspruch 1, dadurch gekennzeichnet, daß der Körper (2) aus offenzelligem Polyesterschaum besteht.

3. Artikel nach Anspruch 1 oder 2, dadurch gekennzeichnet, daß die bedruckte Oberfläche (4) des Körpers (2) mit einer hautförmigen wasserundurchlässigen durchsichtigen Abdeckschicht (5) versehen ist.

4. Artikel nach Anspruch 3, dadurch gekennzeichnet, daß die Abdeckschicht (5) eine Kunststoff-Folie ist.

5. Artikel nach einem der Ansprüche 1 bis 4, dadurch gekennzeichnet, daß der Aufdruck (3) eine mittels Thermodruck aufgebrachte mehrfarbige Schicht ist.

6. Artikel nach Anspruch 5, dadurch gekennzeichnet, daß die mehrfarbige Schicht des Aufdruckes (3) Unterbrechungen enthält.